# EUROPEAN PATENT APPLICATION

(11) **EP 3 196 076 A1**
(43) Date of publication of application: **26.07.2017**
(21) Application number: 15841589.3
(22) Date of filing: 28.08.2015
(51) Int. Cl.: B60R 1/00, B60R 1/04, B60R 1/12, H04N 7/18

(54) **ELECTRONIC MIRROR DEVICE**

(30) Priority: 17.09.2014 JP 2014188957
(71) Applicant: Panasonic Intellectual Property Management Co., Ltd., Osaka-shi, Osaka 540-6207 (JP)
(72) Inventor: UCHIMURA, Motonobu, Osaka-shi, Osaka 540-6207 (JP); AKAHORI, Hitoaki, Osaka-shi, Osaka 540-6207 (JP); KANAYA, Masanobu, Osaka-shi, Osaka 640-6207 (JP)
(74) Representative: Schwabe - Sandmair - Marx
(86) International application number: PCT/JP2015/004346
(87) International publication number: WO 2016/042713

(57) **Abstract**

A controller identifies an object in interest that is a proximate object moving in a direction toward a vehicle based on a time-series change of a camera image captured by a camera by using an image processing unit. The controller identifies a distance between the object in interest and the vehicle based on a measurement result of a measurement unit and the time-series change of the camera image. When the object in interest enters within a predetermined distance from the vehicle, the controller magnifies or reduces the camera image including the object in interest by using an image processing unit based on a magnification ratio to make a size of the object in interest in the camera image stored in a storage unit to be a size of the object in interest reflected in a half mirror, and displays the camera image on a liquid crystal display.

## Description

### TECHNICAL FIELD

The present invention relates to an electronic mirror device that presents an image, which is captured by a camera mounted on a vehicle, to a driver.

### BACKGROUND ART

As a conventional electronic mirror device, a known electronic mirror device has a half mirror on a front surface of an image display unit. The known electronic mirror device displays an image captured by a rear camera mounted on a rear portion of a vehicle on the image display unit, and the driver views the image displayed on the image display unit through the half mirror to confirm the rear view when the rear view for the driver is interrupted by a display for a backseat and the like and therefore the driver is difficult to confirm the rear view by using the half mirror (for example, see PTL 1).

### Citation List

### Patent Literature

PTL 1: Unexamined Japanese Patent Publication No. H11-291817

### SUMMARY OF THE INVENTION

An electronic mirror device of the present invention includes a display, a body case, and a controller. The display is mounted on an installation position of a rear-view mirror in an interior of a vehicle, and displays a camera image captured by a camera that is mounted on a rear portion of the vehicle and captures an image of a rear view of the vehicle. The body case includes a controller that controls the display. The display includes the body case having an opening on a side of a driver seat, an image display unit that is mounted to the body case and displays the camera image, and a half mirror disposed at a side of the driver seat of the image display unit. The controller is configured to identify an image of an object moving in a direction toward an own vehicle in the camera image, and to display a camera image in which a size of the identified object in a display image on the image display unit is magnified or reduced to a size of the object reflected in the half mirror, on the image display unit.

According to the present invention, the size of the object moving in the direction toward the own vehicle reflected in the half mirror and the size of the object moving in the direction toward the own vehicle displayed on the image display unit will be approximately the same size with each other.

Thus, it is possible to provide an electronic mirror device capable of suppressing incorrect recognition of a distance between the own vehicle and the object captured by the camera, which occurs when a display is switched from the half mirror to the image display unit.

### BRIEF DESCRIPTION OF DRAWINGS

FIG. 1 is a front view illustrating an interior of an automobile mounting an electronic mirror device according to a first exemplary embodiment of the present invention.
FIG. 2 is a plan view of the automobile mounting the electronic mirror device according to the first exemplary embodiment of the present invention.
FIG. 3 is a schematic view illustrating the interior of the automobile mounting the electronic mirror device according to the first exemplary embodiment of the present invention, viewed from side.
FIG. 4 is a front view of a display device according to the first exemplary embodiment of the present invention.
FIG. 5 is a cross-sectional view of the display device according to the first exemplary embodiment of the present invention.
FIG. 6 is a control block diagram of the electronic mirror device according to the first exemplary embodiment of the present invention.
FIG. 7 is a flowchart illustrating an example of an operation of the electronic mirror device according to the first exemplary embodiment of the present invention.

### DESCRIPTION OF EMBODIMENT

Prior to a description of an exemplary embodiment of the present invention, a problem of a conventional electronic mirror device will be briefly described. In the conventional electronic mirror device, in order to present much information contained in a rear view of a vehicle to a driver, a range of an image captured by a rear camera is set wider in comparison with a range reflected in a half mirror viewed from a driver seat.

Therefore, when an object is present at a certain distance from an own vehicle, which is, for example, a following vehicle running after the own vehicle is viewed through both the rear camera and the half mirror, a following vehicle displayed on an image display unit and a following vehicle reflected in the half mirror viewed from the driver seat are visually different in size.

Due to the difference in size, when the electronic mirror device is switched from the half mirror to the image display unit, there is a possibility in which the driver incorrectly recognizes a distance between the own vehicle and the following vehicle.

When the own vehicle, for example, changes a traffic lane during running a road with two lanes, the driver confirms the rear view of the own vehicle. While the following vehicle runs at a distant place from the own vehicle, the difference in size between the following vehicle displayed on the image display unit and the following vehicle reflected in the half mirror is small. Therefore, when a display of the electronic mirror device is switched from the half mirror to the image display unit, the possibility for incorrectly recognizing the distance between the own vehicle and the following vehicle is low.

When the following vehicle comes near the own vehicle, the difference in size between the following vehicle displayed on the image display unit and the following vehicle reflected in the half mirror becomes large. Then, when the display of the electronic mirror device is switched from the half mirror to the image display unit, the possibility for incorrectly recognizing the distance between the own vehicle and the following vehicle becomes high.

To solve the above problem, an object of the present invention is to provide an electronic mirror device capable of suppressing the incorrect recognition of the distance between the own vehicle and an object captured by the camera, which occurs when the half mirror is switched to the image display unit.

Hereinafter, an example in which the electronic mirror device according to an exemplary embodiment of the present invention is mounted on the vehicle will be described with reference to the drawings.

### FIRST EXEMPLARY EMBODIMENT

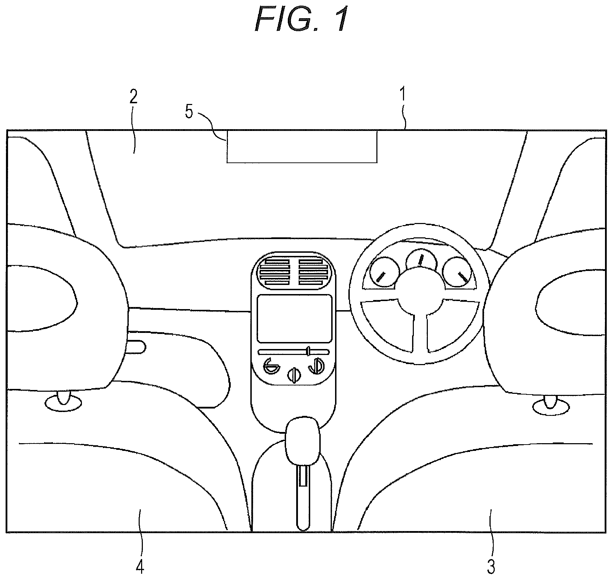

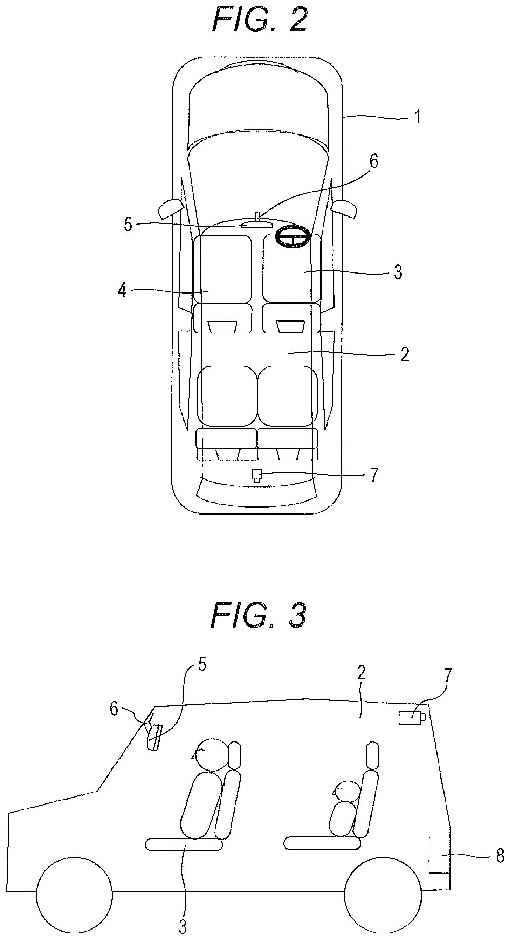

As illustrated in FIGS. 1 to 3, display 5 configuring the electronic mirror device is mounted on an installation position of a rear-view mirror in front of a portion between driver seat 3 and passenger seat 4 in vehicle interior 2 of vehicle 1, so as to be adjustable with respect to mounting portion 6.

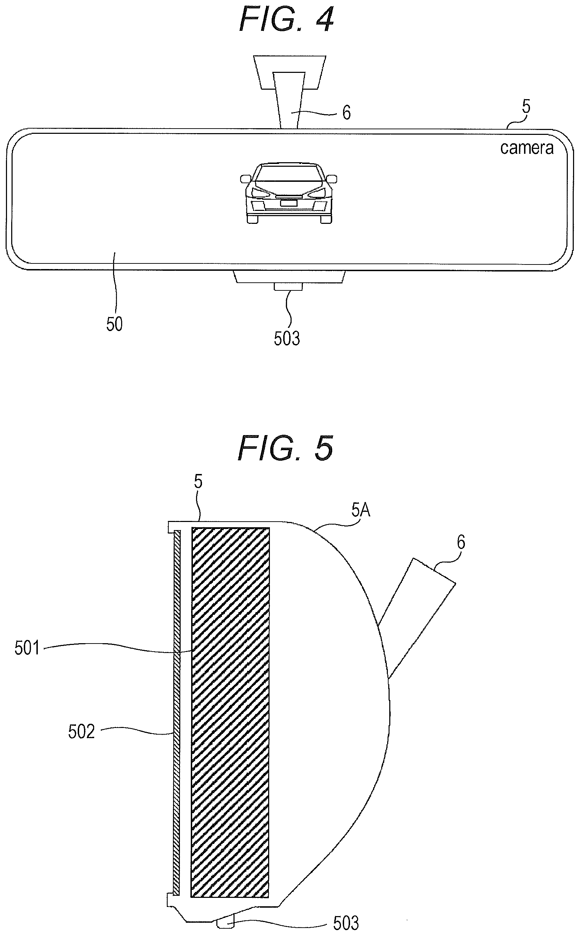

Image 50 displayed on display 5 can be switched between a display by a liquid crystal display serving as an image display unit and a reflection image by a half mirror, according to an operation of operating unit 503, as illustrated in FIG. 4.

Display 5 includes body case 5A having an opening on a side of the driver seat as illustrated in FIG. 5, liquid crystal display 501 housed in body case 5A such that its liquid crystal display surface is directed to the side of the driver seat, half mirror 502 disposed to liquid crystal display 501 on the side of the driver seat, and operating unit 503 for turning on and off liquid crystal display 501.

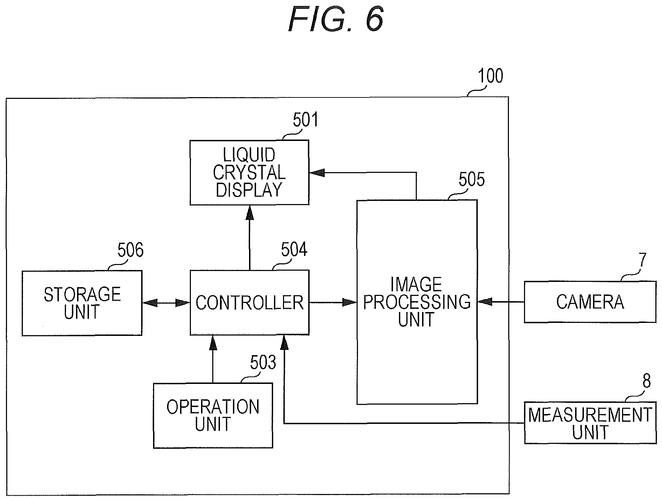

Liquid crystal display 501 is connected to controller 504 that controls entire electronic mirror device 100, as illustrated in FIG. 6. Operating unit 503, storage unit 506, image processing unit 505, and measurement unit 8 are connected to controller 504.

Measurement unit 8 measures a positional relationship between an object present in a rear side of vehicle 1 and vehicle 1. Measurement unit 8 outputs a measurement result to controller 504 at every prescribed time interval. Measurement unit 8 is configured with a laser radar, for example.

Image processing unit 505 is connected to camera 7 that is disposed at a rear portion of vehicle 1 and captures an image of a rear view of vehicle 1. Camera 7 captures the image of the rear view with a wider range in comparison with a range reflected in half mirror 502 viewed from the driver seat. Image processing unit 505 performs image processing on a camera image captured by camera 7. Image processing unit 505 generates a camera image displayed by liquid crystal display 501.

Storage unit 506 stores a control program, temporarily held data, control data, and the like by which controller 504 controls electronic mirror device 100.

Storage unit 506 stores data indicating a corresponding relationship between "a size of an object in the camera image captured by camera 7 and a distance between the object and vehicle 1", and "a size of the object reflected in half mirror 502 viewed from the driver seat", as a function or a corresponding table.

An example of a main operation of electronic mirror device 100 of a first exemplary embodiment of the present invention thus configured will be described.

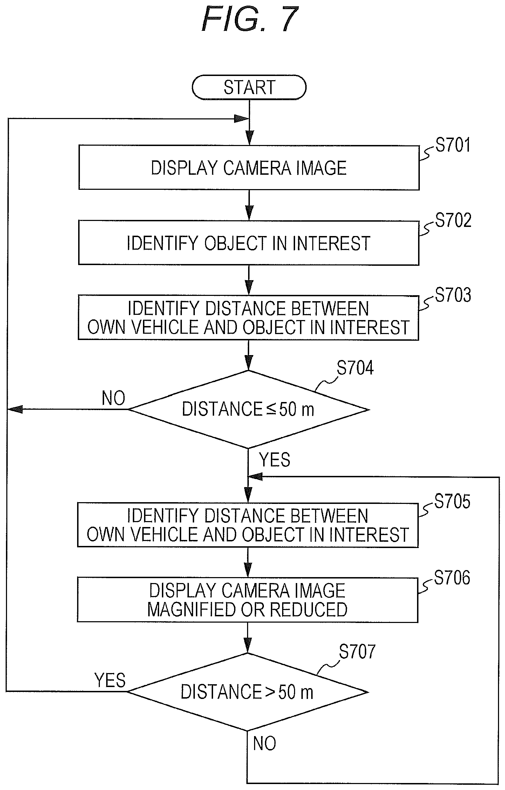

FIG. 7 is a flowchart illustrating the example of the main operation of the first exemplary embodiment of electronic mirror device 100.

When the display of electronic mirror device 100 is switched to liquid crystal display 501 according to the operation of operating unit 503, controller 504 makes the camera image captured by camera 7 to be displayed on liquid crystal display 501, and then the reflection image of half mirror 502 is made invisible (step S701).

Controller 504 identifies a proximate object moving in a direction toward an own vehicle (hereafter, referred to as object in interest) from a time-series change of the camera image captured by camera 7 by using image processing unit 505.

Controller 504 identifies a distance between the object in interest and the own vehicle based on the measurement result of measurement unit 8 and the time-series change of the camera image (step S703).

Controller 504 determines whether the object in interest enters within a predetermined distance from the own vehicle, or for example, whether the distance between the object in interest and the own vehicle is or less than 50 m (step S704). When the distance between the object in interest and the own vehicle is more than 50 m (NO in step S704), the process proceeds to step S701.

When the distance between the object in interest and the own vehicle is or less than 50 m (YES in step S704), controller 504 identifies the distance between the object in interest and the own vehicle based on the measurement result of measurement unit 8 (step S705). Controller 504 calculates a size of the object in interest in the camera image by using image processing unit 505.

Controller 504 generates a camera image including the object in interest that has approximately the same size as the object in interest reflected in half mirror 502 by magnifying or reducing the camera image including the object in interest by using image processing unit 505, based on the corresponding relationship between "the size of the object in the camera image captured by camera 7 and the distance between the object and vehicle 1", and "the size of the object reflected in half mirror 502 viewed from the driver seat" that are stored in storage unit 506. The above corresponding relationship corresponds to a magnification ratio to make the size of the object in interest in the camera image to be the size of the object in interest reflected in half mirror 502 viewed from the driver seat. Liquid crystal display 501 displays the camera image generated by image processing unit 505 (step S706).

Controller 504 determines whether the distance between the own vehicle and the object in interest exceeds a predetermined distance that is, for example, 50 m (step S707). When the distance between the object in interest and the own vehicle exceeds 50 m (YES in step S707), the process proceeds to step S701.

When the object in interest is within the distance not more than 50m from the own vehicle (NO in step S707), the process proceeds to step S705.

The processes illustrated in FIG. 7 are executed until the display of liquid crystal display 501 of electronic mirror device 100 is terminated. By the termination of the display of liquid crystal display 501, the reflection image in the half mirror 502 is made visible.

As described above, when the object moving in the direction toward the own vehicle enters within the predetermined distance from the own vehicle, electronic mirror device 100 according to the first exemplary embodiment of the present invention magnifies or reduces the camera image such that the size of the object moving in the direction toward the own vehicle in the camera image captured by camera 7 becomes equal to the size of the object reflected in half mirror 502 viewed from the driver seat, and displays the camera image on liquid crystal display 501. The object moving in the direction toward the own vehicle is displayed such that the image reflected in half mirror 502 viewed from the driver seat and the image displayed on liquid crystal display 501 have approximately the same size with each other.

Thus, it is possible to suppress incorrect recognition of the distance between the own vehicle and the object captured by the camera, which occurs when electronic mirror device 100 is switched from half mirror 502 to liquid crystal display 501.

In the first exemplary embodiment, the laser radar serving as the measurement unit is used to measure the distance between the object moving in the direction toward the own vehicle and the own vehicle. However, a configuration in which a vehicle width in a camera image capturing a vehicle having a typical vehicle width that is, for example, a vehicle width of 1800 mm, and a distance between the above vehicle and the own vehicle are stored in storage unit 506 as data, and the distance between the object moving in the direction toward the own vehicle and the own vehicle is calculated based on a vehicle width of the vehicle in the camera image may be used.

Thus, it is possible to provide the electronic mirror device capable of suppressing the incorrect recognition of the distance between the own vehicle and the object captured by the camera, which occurs when the half mirror is switched to the image display unit, without providing the measurement unit.

### INDUSTRIAL APPLICABILITY

The electronic mirror device of the present invention is useful as a vehicle-mounted monitoring device.

### REFERENCE MARKS IN THE DRAWINGS

- 1: vehicle
- 2: vehicle interior
- 3: driver seat
- 4: passenger seat
- 5: display
- 5A: body case
- 6: mounting portion
- 7: camera
- 8: measurement unit
- 50: image
- 501: liquid crystal display
- 502: half mirror
- 503: operation unit
- 504: controller
- 505: image processing unit
- 506: storage unit
- 100: electronic mirror device

## Claims

1. An electronic mirror device comprising:
a display that is mounted on an installation position of a rear-view mirror in an interior of a vehicle, and displays a camera image captured by a camera that is mounted on a rear portion of the vehicle and captures an image of a rear view of the vehicle; and
a controller that controls the display,
wherein the display includes:
a body case having an opening on a side of a driver seat of the vehicle;
an image display unit that is mounted to the body case and displays the camera image; and
a half mirror disposed at a side of the driver seat of the image display unit,
wherein the controller identifies an object moving in a direction toward the vehicle in the camera image, and displays a camera image in which a size of the identified object in a display image on the image display unit is magnified or reduced to a size of the object reflected in the half mirror viewed from the driver seat, on the image display unit.

2. The electronic mirror device according to claim 1, wherein the controller magnifies or reduces the camera image including the object moving in the direction toward the vehicle in the camera image, based on a measurement result of a measurement unit that measures a distance between the vehicle and the object moving in the direction toward the vehicle.

3. The electronic mirror device according to claim 1 or 2, wherein the controller magnifies or reduces the camera image including the object moving in the direction toward the vehicle in the camera image, when the object moving in the direction toward the vehicle is present within a predetermined distance from the vehicle.

4. The electronic mirror device according to any one of claims 1 to 3, wherein the controller magnifies the camera image including a proximate object moving in the direction toward the vehicle.
